# EUROPEAN PATENT APPLICATION

(11) **EP 3 686 855 A1**
(43) Date of publication of application: **29.07.2020**
(21) Application number: 19382055.2
(22) Date of filing: 25.01.2019
(51) Int. Cl.: G07F 17/32, A63F 13/90, G07F 9/10

(54) **PROTECTIVE CASING FOR AN ARCADE MACHINE**

(71) Applicant: Osorio Velasco, Antonio, 08130 Santa Perpetua de Mogoda (Barcelona) (ES)
(72) Inventor: Osorio Velasco, Antonio, 08130 Santa Perpetua de Mogoda (Barcelona) (ES)
(74) Representative: Capitán García, Maria Nuria

(57) **Abstract**

A protective casing for an arcade machine, comprising a rear casing portion comprising a rear wall and first and second side walls disposed on either side of the rear wall, and a front casing portion comprising an upper door and a lower door that control respective accesses to a screen and to a control panel of the arcade machine, wherein the lower door is a double-leaf door comprising first leaves articulately joined to respective first ends of arms comprising respective second pivoting ends in the first and second side wall.

## Description

### TECHNICAL FIELD OF THE INVENTION

The present invention is encompassed in the field of means of protection for coin-operated arcade machines. Specifically, with a protective casing for said machines.

The protective casing object of the present invention is applicable to any type of arcade machine having a screen or front panel and a control panel, for example, with a touch keyboard and a coin and/or note box, susceptible to acts of vandalism with a view to accessing the money in its interior.

### BACKGROUND OF THE INVENTION

Protective enclosures for arcade machines such as that described in Spanish utility model number ES 1070960, wherein the protection basically consists of two bodies, a fixed body and a mobile body, wherein the latter can move relative to the fixed body, are known.

To this end, the fixed body has sliding and guiding means that cooperate with complementary means disposed on the mobile body, and wherein the mobile body also has rolling means to move the mobile body over the fixed body.

Likewise, the fixed body has four sides, two lateral sides, a bottom and a roof, in addition to a floor. The mobile body has an upper box where a blind is housed that can be raised to make the arcade machine available to the public and lowered to protect same, by fixing the blind to the ground or anywhere else.

While this means of protection might be effective, it is cumbersome and complicated both in its manufacture and daily use.

There are other protection systems consisting of doors that are folded back on the lateral sides of a protective casing, which slide along guides until they can be rotated to close the protection assembly. These systems, while achieving the desired purpose, are also expensive and complex.

For this reason, a protective casing design for coin-operated arcade machines is required that, in a simple and inexpensive way, makes it possible to overcome the aforementioned drawbacks.

### DESCRIPTION OF THE INVENTION

The present invention is established and characterised in the independent claims, while the dependent claims describe other features thereof.

The object of the invention is a protective casing for coin-operated arcade machines.

The protective casing comprises:
- a rear casing portion comprising a rear wall and first and second side walls disposed on either side of the rear wall, and
- a front casing portion comprising an upper door and a lower door that control respective accesses to a screen and a control panel of the arcade machine.

Wherein the lower door is a double-leaf door comprising first leaves that are joined in an articulated manner to respective first ends of arms comprising respective second pivoting ends in the first and second side wall.

Likewise, the upper door may be a double-leaf door, wherein second leaves of said upper door may be articulately joined to the first and second side wall, respectively, for example through a double hinge assembly.

This makes it possible to allow access to the arcade machine for use when desired, since the upper and lower doors of the front casing portion are easily moved away from both the front screen and the control panel of the machine once the means for closing the upper door and the lower door, respectively, have been released in an authorised manner without forcing. The first leaves forming the lower door are folded against the outer face of the respective arms, which are pivoted downwards with a view to retracting the first leaves of the lower door towards the respective first and second side walls as much as possible. Likewise, the second leaves forming the upper door can be retracted and folded towards the rear wall of the rear casing portion by actuating the double hinge assembly.

However, when access to the use of the arcade machine must be limited, the arms are pivoted again, this time upwards, such as to unfold the first leaves of the lower door over the control panel of the machine once again. Likewise, the double hinge assemblies are actuated again, extending the second leaves of the upper door in front of the machine screen. Applying the respective means for closing the upper door and the lower door prevents unauthorised access to the machine, avoiding both its use and damages to the screen and/or vulnerable parts of the control panel, for example, with the intention of accessing the money in its interior.

### BRIEF DESCRIPTION OF THE FIGURES

This specification is supplemented by a set of drawings illustrating the preferred embodiment but which are never intended to limit the invention.
Figure 1 shows a front perspective view of the protective casing, disposed on the exterior of an arcade machine.
Figure 2 shows a side perspective sectional view of the casing of figure 1, showing the arm with its fixing means, used to extend/retract the lower door of the front casing portion.
Figure 3 shows a side perspective sectional view of the casing of figure 1, showing the double hinge assembly, used to extend/retract the upper door of the front casing portion.

### DETAILED DESCRIPTION OF THE INVENTION

The present invention is a protective casing for coin-operated arcade machines.

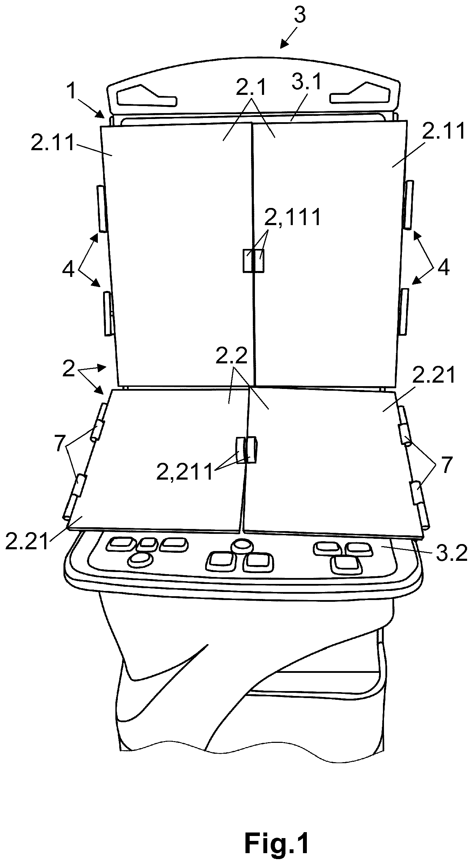

As shown in figure 1, the protective casing comprises:
- a rear casing portion (1) which in turn comprises a rear wall (1.1) and first and second side walls (1.2, 1.3) disposed on either side of the rear wall (1.1), and
- a front casing portion (2) comprising an upper door (2.1) and a lower door (2.2) that control respective accesses to a screen (3.1) and to a control panel (3.2) of the arcade machine (3).

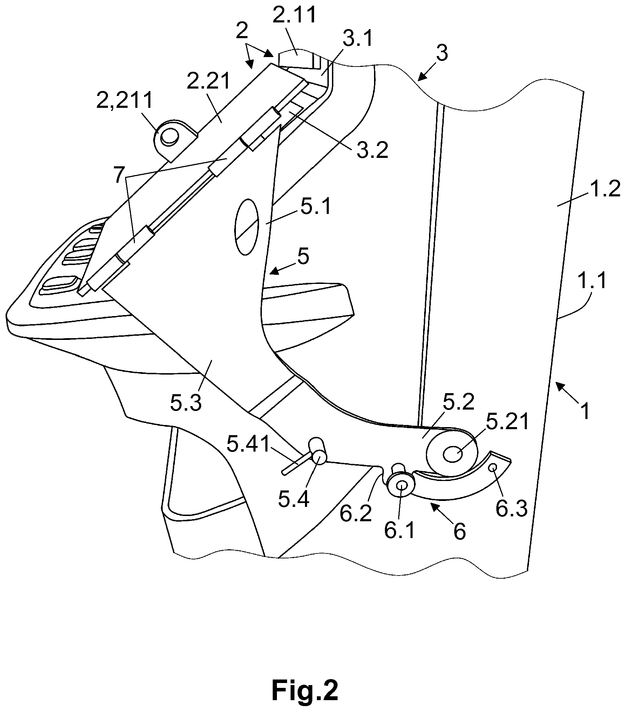

The lower door (2.2) is a double-leaf door comprising first leaves (2.21) that are articulately joined to respective first ends (5.1) of arms (5). See figure 2. Preferably, each first leaf (2.21) of the lower door (2.2) is joined to the first end (5.1) of the respective arm (5) by means of a hinge (7), said hinge allowing folding and unfolding of the first leaf (2.21) with respect to the outer face (5.3) of the arm (5).

The arms (5) comprise respective second pivoting ends (5.2) on the first and second side wall (1.2, 1.3).

As shown in Figure 2, the second end (5.2) of the arm (5) shall preferably comprise fixing means (6) for fixing the position of the arm (5) with respect to the first or second side wall (1.2, 1.3), upon rotating on the pivot axis (5.21). For example, the fixing means (6) may comprise a retractable pin (6.1) disposed in the arm (5), alternately insertable in a front hole (6.2) and in a rear hole (6.3) made in the first or second side wall (1.2, 1.3).

This makes it possible to fix the arm (5) in a first extended position (when the arm (5) moves upwards and the retractable pin (6.1) is fixed in the front hole (6.2)) and in a second retracted position (when the arm (5) moves downwards and the retractable pin (6.1) is fixed in the rear hole (6.3), with respect to the first or second side wall (1.2, 1.3). In the extended position of the arms (5), shown in figures 1 and 2, the first leaves (2.21) of the lower door (2.2) can be unfolded on the control panel (3.2) of the arcade machine (3), limiting access to the vulnerable parts of said panel (3.2).

Subsequently, in order to allow access to the control panel (3.2), the first leaves (2.21) of the lower door (2.2) are folded against the outer face (5.3) of the respective arms (5), wherein said arms, for example, may comprise removable retaining means for retaining (5.4) the first leaf (2.21) on the arm (5). For example, the retaining means (5.4) may comprise a lateral projection (5.41) which, when said retaining means (5.4) rotate towards the first leaf (2.21), obstruct or retain said first leaf (2.21) on the arm (5). Next, the arms (5) are pivoted downwards, i.e. towards their retracted position, thereby retracting the first leaves (2.21) towards the respective first and second side walls (1.2, 1.3) as much as possible, so as not to impede the use of the arcade machine (3).

Likewise, the arm (5) can be designed such that the first end (5.1) is more outwardly disposed than the second end (5.2), thereby achieving greater separation between said first end (5.1) and the first or second (5.1) side wall (1.2, 1.3), which makes it possible to reach the height of a lug (2.211) of the first leaf (2.21) upon folding said leaf on the arm (5), which is taken to its second retracted position, with a view to preventing said lug (2.211) from coming into contact with the first or second side wall (1.2, 1.3).

The upper door (2.1) of the front casing portion (2) shall also preferably be a double-leaf door, wherein second leaves (2.11) of the upper door (2.1) are articulately joined to the first and second side wall (1.2, 1.3), respectively. For example, each second leaf (2.11) of the upper door (2.1) can be joined to the corresponding first or second side wall (1.2, 1.3) by means of a double hinge assembly (4).

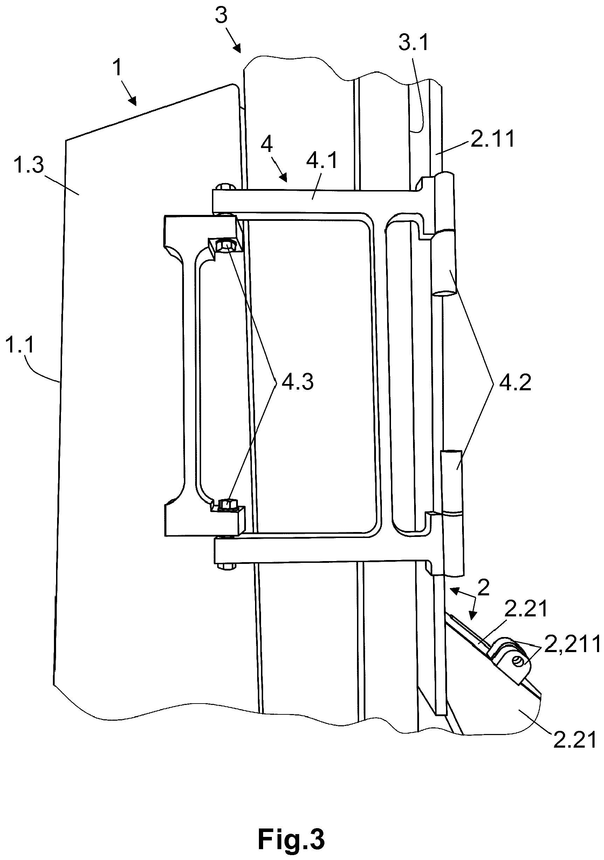

Preferably, as shown in Figure 3, the double hinge assembly (4) comprises a central element (4.1) that forms a first hinge (4.2) with the second leaf (2.11) of the upper door (2.1) and a second hinge (4.3) with the first or second side wall (1.2, 1.3).

Therefore, in order to allow access to the front screen (3.1) of the arcade machine (3), to remove the upper door (2.1) each second leaf (2.11) is retracted towards the rear casing portion (1) and folded behind the rear wall (1.1) through the actuation of the double hinge assembly (4) which, for such purpose, is firstly articulated on its second hinge (4.3), retracting the central body (4.1) towards the first or second side wall (1.2, 1.3), and then the first hinge (4.2) is articulated, folding the second leaf (2.11) towards the rear wall (1.1), with a view to preventing said second leaves (2.11) from impeding the use of the arcade machine (3).

Likewise, in order to limit access to the screen (3.1) of the arcade machine (3), the double hinge assemblies (4) are actuated again, this time extending the second leaves (2.11) of the upper door (2.1) in front of the screen (3.1) of the machine (3).

Lastly, both the first leaves (2.21) of the lower door (2.2) and the second leaves (2.11) of the lower door (2.1) shall preferably be adapted to be fixed to each other by means of closing means (not shown in the figures). For example, in the embodiment shown in the figures, both the first leaves (2.21) and the second leaves (2.11) comprise respective lugs (2.111, 2.211), respectively used to couple a padlock therebetween as closing means.

Thus, unauthorised access to the arcade machine (3) is impeded when desired, avoiding both its use and damages to the screen (3.1) and/or the control panel (3.2), for example, with the intention of accessing the money in its interior.

## Claims

1. A protective casing for an arcade machine, comprising:
- a rear casing portion (1) comprising a rear wall (1.1) and first and second side walls (1.2, 1.3) disposed on either side of the rear wall (1.1), and
- a front casing portion (2) comprising an upper door (2.1) and a lower door (2.2) that control respective accesses to a screen (3.1) and a control panel (3.2) of the arcade machine (3),
**characterised in that** the lower door (2.2) is a double-leaf door comprising first leaves (2.21) that are articulately joined to both first ends (5.1) of arms (5) comprising respective second pivoting ends (5.2) in the first and second side wall (1.2, 1.3).

2. Casing, according to claim 1, wherein the second end (5.2) of the arm (5) comprises fixing means (6) for fixing the position of the arm (5) with respect to the first or second side wall (1.2, 1.3).

3. Casing, according to claim 2, wherein the fixing means (6) comprise a retractable pin (6.1), disposed in the arm (5), alternately insertable in holes (6.2, 6.3) made in the first or second side wall (1.2, 1.3).

4. Casing, according to claim 1, wherein the first leaf (2.21) of the lower door (2.2) is joined to the first end (5.1) of the arm (5) by means of a hinge (7).

5. Casing, according to claim 1, wherein the first leaves (2.21) are adapted to be fixed to each other by means of locking means.

6. Casing, according to claim 1, wherein the upper door (2.1) is a double-leaf door.

7. Casing, according to claim 6, wherein second leaves (2.11) of the upper door (2.1) are articulately joined to the first and second side wall (1.2, 1.3), respectively.

8. Casing, according to claim 7, wherein the second leaf (2.11) of the upper door (2.1) is joined to the first or second side wall (1.2, 1.3) by means of a double hinge assembly (4).

9. Casing, according to claim 8, wherein the double hinge assembly (4) comprises a central element (4.1) that forms a first hinge (4.2) with the second leaf (2.11) of the upper door (2.1) and a second hinge (4.3) with the first or second side wall (1.2, 1.3).

10. Casing, according to claim 7, wherein the second leaves (2.11) are adapted to be fixed to each other by means of closing means.

## Amended claims

### Amended claims in accordance with Rule 137(2) EPC.

1. A protective casing for an arcade machine, comprising:
- a rear casing portion (1) comprising a rear wall (1.1) and first and second side walls (1.2, 1.3) disposed on either side of the rear wall (1.1), and
- a front casing portion (2) comprising an upper door (2.1) and a lower door (2.2) that control respective accesses to a screen (3.1) and a control panel (3.2) of the arcade machine (3),
**characterised in that** the lower door (2.2) is a double-leaf door comprising first leaves (2.21) that are articulately joined to both first ends (5.1) of arms (5) comprising respective second pivoting ends (5.2) in the first and second side wall (1.2, 1.3) so as to be pivotable upwards or downwards.

2. Casing, according to claim 1, wherein the second end (5.2) of the arm (5) comprises fixing means (6) for fixing the position of the arm (5) with respect to the first or second side wall (1.2, 1.3).

3. Casing, according to claim 2, wherein the fixing means (6) comprise a retractable pin (6.1), disposed in the arm (5), alternately insertable in holes (6.2, 6.3) made in the first or second side wall (1.2, 1.3).

4. Casing, according to claim 1, wherein the first leaves (2.21) of the lower door (2.2) is joined to the first end (5.1) of the arm (5) by means of a hinge (7).

5. Casing, according to claim 1, wherein the first leaves (2.21) are adapted to be fixed to each other by means of locking means.

6. Casing, according to claim 1, wherein the upper door (2.1) is a double-leaf door.

7. Casing, according to claim 6, wherein second leaves (2.11) of the upper door (2.1) are articulately joined to the first and second side wall (1.2, 1.3), respectively.

8. Casing, according to claim 7, wherein the second leaf (2.11) of the upper door (2.1) is joined to the first or second side wall (1.2, 1.3) by means of a double hinge assembly (4).

9. Casing, according to claim 8, wherein the double hinge assembly (4) comprises a central element (4.1) that forms a first hinge (4.2) with the second leaf (2.11) of the upper door (2.1) and a second hinge (4.3) with the first or second side wall (1.2, 1.3).

10. Casing, according to claim 7, wherein the second leaves (2.11) are adapted to be fixed to each other by means of closing means.
